# EUROPÄISCHE PATENTSCHRIFT

(11) **EP 2 620 054 B1**
(45) Veröffentlichungstag und Bekanntmachung des Hinweises auf die Patenterteilung: **09.11.2016**
(21) Anmeldenummer: 12008406.6
(22) Anmeldetag: 18.12.2012
(51) Int. Cl.: A01G 27/00, A01G 9/10

(54) **Vorrichtung zur Langzeitversorgung einer Pflanze und Abdeckung für einen Behälter einer solchen Vorrichtung**
Apparatus for long term supply of a plant and cover for a container of such a device
Dispositif de traitement à long terme d'une plante et recouvrement pour un conteneur d'un tel dispositif

(30) Priorität: 24.01.2012 DE 102012001213; 10.04.2012 DE 102012006961
(43) Veröffentlichungstag der Anmeldung: 31.07.2013
(73) Patentinhaber: Braun, Peter Marco, 74348 Lauffen/N (DE)
(72) Erfinder: Braun, Peter Marco, 74348 Lauffen/N (DE)
(74) Vertreter: Geitz Truckenmüller Lucht

(56) Entgegenhaltungen:
- DE-A1- 2 849 044
- FR-A1- 2 564 285
- GB-A- 2 048 635
- GB-A- 2 431 851

## Beschreibung

Die vorliegende Erfindung betrifft eine Vorrichtung zur Langzeitversorgung einer Pflanze in einem Pflanzsubstrat. Die Vorrichtung ist insbesondere dafür vorgesehen, eine Pflanze über einen langen Zeitraum hinweg mit ausreichend Wasser oder anderen Flüssigkeiten und Nährstoffen zu versorgen.

### Stand der Technik

Bei Einzel- oder Gruppenbepflanzungen im Garten, in Parks, bei der Begrünung von Wohn- und Freizeitanlagen ist insbesondere die Zeit, bis die Pflanzen an ihrem Standort angewachsen und richtig verwurzelt sind mit einer intensiven Pflege verbunden. Vor allem bei Neupflanzungen stellt sich die Situation wie folgt dar: Für die Pflanzung wurden die Pflanzen von Ihrem ursprünglichen Standort entnommen, wobei sich Licht-, Boden- und evtl. sogar Klimaverhältnisse geändert haben. Da die Pflanze noch nicht im Boden verwurzelt ist, leidet sie besonders unter Trockenheit. Sie kann noch nicht auf tiefer liegende Feuchtigkeit zurückgreifen und auch die Faserwurzeln sind noch nicht so weit entwickelt, dass sie über die Reserven der Umgebung verfügen kann. Es ist daher wichtig, die Pflanzen gerade in dieser Zeit besonders gut mit zusätzlichen Nährstoffen und dem Nährstoffe liefernden Wasser zu versorgen. Ein zusätzlicher Wasserbedarf kann sich darüber hinaus an trockenen Standorten und in Trockenperioden ergeben. Darüber hinaus schwächt eine unzureichende Wasserversorgung die Pflanzen und hemmt diese in ihrer Entwicklung. Die geschwächten Pflanzen stellen ein leichtes Ziel für Schädlinge und andere Krankheitserreger dar. Hierbei kommt es neben vermindertem Wuchs und Nekrosen auch zu Totalausfällen, die gerade bei teuren oder seltenen Pflanzen mit einem erheblichen wirtschaftlichen Schaden verbunden sind. Ferner nimmt die Bewässerung bei der Aufzucht von Nutzpflanzen großen Einfluss auf den Ertrag. Eine regelmäßige Bewässerung der Pflanzen ist jedoch mühsam und mit einem enormen Zeitaufwand verbunden.

Aus dem Stand der Technik sind Vorrichtungen zur Langzeitversorgung einer Pflanze in einem Pflanzsubstrat bekannt.

Die GB 2 431 851 A betrifft ein Wasserreservoir für Pflanzen mit einem in den Erdboden, in die Nähe eines Wurzelballens eines Baumes, versenkbaren Behälter. Das Wasserreservoir besteht aus Holz, Metall oder Kunststoff. Eine Wurzel des Baums oder ein Teil des Wurzelsvstems wird direkt in den Behälter gepflanzt. In Figur 3 der GB 2 431 851 A sind Behälter mit seitlich abstehenden Auffangabschnitten zur Aufnahme von im Pflanzsubstrat versickernden Wassers dargestellt. Das Wasser im Behälter kann dann direkt von der Pflanze über die Wurzeln aufgenommen werden. Zudem sind in GB 2 431 851 A Behälter mit Abdeckungen dargestellt und beschrieben, welche über einen Bewässerungsschlauch mit Wasser gespeist werden können.

Die DE 28 49 004 A1 offenbart einen Feuchtigkeitsspeicher für Blumentöpfe, Blumenschalen und der Gleichen. Der Feuchtigkeitsspeicher besteht hierbei aus einer eine wasserspeichernde Masse enthaltenden Hülle, die vor der Bepflanzung in ein Blumengiefäß hineingegeben und mit Erde bedeckt wird. Die wasserspeichernde Masse wird mit Hilfe einer gelochten Folie oder einem Vlies gegen die Erde abgegrenzt, so dass Feuchtigkeit über die gelochte oder poröse oder vliesartige Oberfläche des Feuchtigkeitsspeichers der Blumenerde zugeführt werden kann.

Die GB 2 048 635 A betrifft ein Wasserreservoir mit einem Behälter und einer perforierten Abdeckung. Durch die Perforation in der Abdeckung kann zum einen die Pflanze mit Ihren Wurzeln in das Reservoir eindringen, zum anderen wird der Behälter bei Regen oder einer künstlichen Bewässerung mit versickerndem Wasser befüllt. Das Reservoir besteht aus Kunststoff, Metall oder Steinzeug.

Die Vorrichtungen sind im Pftanzsubstrat einer erhöhten Druckbelastung ausgesetzt.

Der Erfindung liegt die Aufgabe zugrunde, eine Vorrichtung zur Verfügung zu stellen, die Pflanzen vor Trockenheit schützt, das Wachstum beschleunigt und zudem eine erhebliche Zeit- und Wasserersparnis ermöglicht. Eine weitere Aufgabe besteht darin, eine Vorrichtung mit einer belastbaren Abdeckung für einen Behälter der Vorrichtung zur Langzeitversorgung zur Verfügung zu stellen, die einer erhöhten Druckbelastung im Pflanzsubstrat widersteht.

### Die Erfindung und ihre Vorteile

Diese Aufgaben werden durch die erfindungsgemäße Vorrichtung gemäß Anspruch 1 gelöst.

Die Vorrichtung ist hierzu mit einem Behälter zur Anbringung im Wurzelbereich einer Pflanze, mit einer den Behälter unten als Behälterboden und seitlich als Wand begrenzenden Wandung, mit einer dem Behälterboden gegenüberliegenden Öffnung und mit mindestens einem seitlich nach außen abstehenden Auffangabschnitt an dem Behälter zur Aufnahme von im Pflanzsubstrat versickernden Wassers ausgestattet.

Die Vorrichtung hat den Vorteil, dass ein Teil des Wassers, welches bei Regen oder beim Gießen an den Wurzeln der Pflanzen vorbeifließt, daran gehindert wird, in tiefere Lagen des Pflanzsubstrates vorzudringen, da es von den seitlichen Auffangabschnitten aufgenommen wird. Hierdurch wird in den Boden sickerndes, nicht direkt von der Pflanze aufgenommenes Wasser zurückgewonnen. Das Wasser sammelt sich bei Regen oder beim Gießvorgang in dem Behälter der Vorrichtung, welcher im Wurzelbereich der Pflanze angeordnet ist. Pflanzsubstrat im Behälter reichert sich mit dem aufgefangenen Wasser an. Hierdurch entsteht ein Wasserreservoir im Wurzelbereich der Pflanze. Die Pflanze kann sich einerseits direkt über die Öffnung im Behälter mit Wasser und den darin enthaltenen Nährstoffen versorgen. Dies beschleunigt das Wachstum der Pflanzen. Andererseits bildet sich bei Ausbleiben von Regen oder einer Begießung ein Feuchtigkeitsgefälle zwischen dem mit Wasser angereicherten Pflanzsubstrat im Behälter oder in der Nähe des Behälters und dem weiter von dem Behälter entfernten Pflanzsubstrat aus. Durch das entstehende Gefälle wird das Wasser über die Öffnung des Behälters gerichtet von dem Pflanzsubstrat im Behälter an das weiter entfernte Pflanzsubstrat abgegeben. Eine zusätzliche Bewässerung der Pflanzen kann vorteilhafterweise weitgehend oder vollkommen unterbleiben.

Die Vorrichtung eignet sich darüber hinaus auch zum Sammeln von anderen Flüssigkeiten, insbesondere von mit Dünger oder mit weiteren, das Pflanzenwachstum fördernden Substanzen angereichertem Wasser. Hiedurch ist eine Pflanzung unabhängig von der Qualität des Pflanzsubstrates auch auf sandigen, trockenen, lehmigen und unvorbereiteten Böden möglich. Die Vorrichtung eignet sich zudem für alle Arten von Pflanzen, unabhängig davon, ob es sich um Nutz- oder Zierpflanzen, Getreide, Gräser oder Bäume handelt.

Ein weiterer Vorteil ist, dass die Vorrichtung mit einem geringen Materialaufwand auskommt. Es ist kein großräumiges Sammelsystem erforderlich, da die Vorrichtung direkt einer Pflanze zugeordnet werden kann. Die Vorrichtung kann in einer einfachen Weise bei einer Pflanzung in das Pflanzloch eingebracht werden. Dadurch, dass der mindestens eine Auffangabschnitt seitlich an dem Behälter angeordnet ist, ist es zudem unerheblich, ob der Behälter unterhalb der Pflanze oder neben der Pflanze angeordnet ist. Der Bereich, in dem das versickernde Wasser aufgefangen werden kann, wird durch die seitlichen Auffangabschnitte ausgedehnt und erweitert. Hierdurch ist es möglich, den Behälter mit ausgesprochener Effizienz in unmittelbarer Nähe zum Wurzelbereich zu platzieren, auch wenn die Pflanze sperrigere oberirdische Triebe aufweist, welche das Regenwasser am Eintritt in das Pflanzsubstrat im nahen Stamm- und somit Wurzelbereich hindern.

Die Vorrichtung kann so bemessen sein, dass ein besonders günstiges Verhältnis von Wasserspeichervolumen zu Wasserabgabefläche genutzt werden kann. Dies kann über die Tiefe des Behälters und über die Querschnittsfläche der Öffnung des Behälters eingestellt und kontrolliert werden. Es kann damit ein an einen individuellen Wasserbedarf bestimmter Pflanzen gezielt angepasstes Verhältnis gewählt werden. Der Behälterboden kann ebenfalls die unterschiedlichsten Abmessungen haben. Es ist möglich, dass sich der Boden auf die Stoßkanten zwischen zwei aneinander grenzende Wandseiten beschränkt. Darüber hinaus können Wand und Behälterboden kontinuierlich ineinander übergehen.

Bei dem mindestens einen Auffangabschnitt kann es sich um eine fortsatzartige Ausformung von Behälterboden oder Wand oder beidem handeln. Der mindestens eine Auffangabschnitt kann auf einen Bereich der Wand und/ oder des Bodens des Behälters begrenzt sein. Der mindestens eine Auffangabschnitt kann eine nach außen gerichtete Längsausdehnung aufweisen, die größer ist als seine Ausdehnung in die übrigen Dimensionen. Hierdurch wird der Auffangradius vergrößert, was die Menge an aufgefangenem Wasser pro Zeiteinheit vergrößert.

Insbesondere im Fall, dass der Behälter unterhalb der Pflanze angeordnet ist, kann der Behälter von seiner Ausdehnung in horizontaler Richtung so bemessen sein, dass die Pflanze die Möglichkeit hat, in kurzer Zeit Wurzeln über den Rand des Behälters hinaus in tiefere Schichten auszubilden. Ein Auffangabschnitt, welcher auf einen Bereich der Wand und/ oder des Bodens des Behälters begrenzt ist, stellt für die Pflanzenwurzeln ein verhältnismäßig geringeres Hindernis auf dem Weg in tieferes Schichten dar, als umlaufende Auffangabschnitte. Die Wurzeln können sich somit leicht an diesem Auffangabschnitt vorbei nach unten erstrecken und können einen möglichst direkten Weg in tiefere Pflanzsubstratschichten nehmen. Die Pflanze kann den Behälter der Vorrichtung demnach mit ihrem Wurzelwerk einfach umwachsen, wobei der mindestens eine seitlich abstehende Auffangabschnitt die Aufnahme von versickerndem Wasser ermöglicht. Hierdurch wird eine feste Verankerung der Pflanze im Erdreich gewährleistet bei gleichzeitiger Versorgung der Pflanze aus der Vorrichtung.

Nach einer vorteilhaften Ausgestaltung der Erfindung ist der mindestens eine Auffangabschnitt flächig, rinnen-, schalen- oder wannenförmig ausgebildet. Eine derartige Ausbildung des mindestens einen Auffangabschnitts dient zur Vergrößerung der Auffangkapazität. Der Auffangabschnitt kann sich zur Peripherie der Vorrichtung hin verbreitern, um die Zuleitung der Flüssigkeit zu beschleunigen. Zudem dient der mindestens eine Auffangabschnitt bevorzugt auch zur Stabilisierung der Vorrichtung. Darüber hinaus kann an dem Behälter und/ oder dem Auffangabschnitt mindestens ein zusätzliches Element zur Stabilisierung und Versteifung wie eine Rille, Vertiefung, Einbuchtung, Noppe, Erhebung oder ein Steg angeordnet sein. Bevorzugt sind mehrere zusätzliche Elemente, besonders bevorzugt ist eine Vielzahl der zusätzlichen Elemente an dem Behälter und/ oder dem Auffangabschnitt angeordnet. Sind mehrere oder viele zusätzliche Elemente zur Stabilisierung oder Versteifung angeordnet, wird der Stabilisierungs- beziehungsweise Versteifungseffekt vorteilhafterweise verstärkt.

Nach einer weiteren vorteilhaften Ausgestaltung der Erfindung sind mehrere Auffangabschnitte an dem Behälter angeordnet und die mehreren seitlich nach außen abstehenden Auffangabschnitte sind zumindest in einem Teilbereich voneinander beabstandet. Ist der Behälter mit mehreren seitlich abstehenden Auffangabschnitten ausgestattet, so kann zumindest in Teilbereichen eine Lücke, ein Zwischenraum beziehungsweise eine Fuge zwischen den Auffangabschnitten ausgebildet sein. Insbesondere stern- oder kleeblattförmige Vorrichtungen eignen sich. Dies gewährleistet insbesondere, Wenn die Vorrichtung unter dem Wurzelbereich in das Pflanzsubstrat eingebracht ist, dass den Wurzeln der Pflanze ein relativ direkter Weg in tiefere Schichten des Pflanzsubstrats zur Verfügung steht, während mit den Auffangabschnitten des Behälters ein effizientes Mittel zur vermehrten Aufnahme von Wasser zur Verfügung steht.

Nach einer weiteren vorteilhaften Ausgestaltung der Erfindung ist der Behälter mit einem von außen nach innen gerichteten Gefälle ausgestattet. Hierdurch kann das von dem mindestens einen Auffangabschnitt aufgenommene Wasser in einer einfachen Weise in dem Behälter gesammelt werden. Hierzu kann der Behälter auch nach Art eines Trichters gestaltet sein, was die Zuleitung des Wassers beschleunigt.

Nach einer weiteren vorteilhaften Ausgestaltung der Erfindung ist die Wandung des Behälters zumindest teilweise mit Aussparungen versehen. Die als Wand und/ oder Boden des Behälters ausgebildete Wandung kann aus einem porösen oder perforierten Material bestehen. Die Wandung kann Poren, Langlöcher, kleine Öffnungen oder fensterartige Öffnungen aufweisen. Hierdurch wird zum einen erreicht, dass Wasser oder Flüssigkeit auch durch die Aussparungen in der Wandung an die Umgebung abgegeben werden kann. Zum anderen können die Wurzeln der Pflanze direkt über die Öffnung des Behälters und über die Aussparungen in den Behälter eindringen.

Aussparungen in der Wand oder einem Teil der Wand des Behälters können je nach gewählter Dimension und Geometrie des Behälters insbesondere dann besonders vorteilhaft sein, wenn die Vorrichtung zur Langzeitversorgung neben der zu versorgenden Pflanze angeordnet ist, da die Pflanzenwurzeln von der Seite mit Flüssigkeit versorgt werden können und zudem seitlich in die Vorrichtung eindringen können.

Aussparungen im Boden des Behälters, insbesondere fensterartige Öffnungen, können als Durchtrittsöffnungen für Wurzeln dienen. Eine Pflanze kann dadurch trotz einer unter ihr angeordneten Vorrichtung zur Langzeitversorgung zumindest mit einem Teil ihrer Wurzeln geradezu vertikal in das Pflanzsubstrat hinein wurzeln. Hierdurch wird bereits kurze Zeit nach Einsatz der Vorrichtung die Verankerung der Pflanze im Pflanzsubstrat verbessert. Sind Aussparungen im Boden des Behälters, ist der Teil der sie umgebenden Wandung des Behälters bevorzugt wiederum als den Behälter seitlich begrenzende Wand ausgebildet, die ein von der Aussparung ausgehendes Gefälle aufweisen kann. Die die Aussparung umgebende Wand hat den Vorteil, dass der durch die Wand gebildete erhöhte Rand in dem Behälter enthaltene Flüssigkeit daran hindert, aus der Vorrichtung durch die Aussparung im Boden des Behälters auszufließen und in tiefere Schichten des Pflanzsubstrats vorzudringen.

Nach einer weiteren vorteilhaften Ausgestaltung der Erfindung ist ein wasser- und/ oder nährstoffspeichernder Stoff in dem Behälter angeordnet. Durch den Einsatz eines wasserspeichernden Stoffes, kann die Wasserspeicherkapazität der Vorrichtung noch deutlich erhöht werden. Diese Stoffe sind in der Lage, ein Mehrfaches ihres Eigengewichtes an Wasser beziehungsweise an mit Nährstoffen und/ oder weiteren wachstumsfördernden Substanzen angereichertes Wasser zu speichern und können etwa 10 mal mehr Feuchtigkeit aufnehmen als gewöhnliche Gartenerde. Der Wasserbinder, oder auch so genannter Superabsorber, kann auf Basis von Acrylat oder wasserspeicherndem Silikat, vernetzter Cellulose, Carboxymethylcellulose oder Stärke sein. Aber auch quellbare Naturprodukte wie Guarderivate eignen sich. Besonders geeignet sind biologisch abbaubare wasserspeichernde Stoffe. Bevorzugt handelt es sich bei dem wasserspeichernden Stoff um ein ein Hydrogel-ausbildendes Polymer. Das hydrogelbildende Polymer kann im Trockenzustand in Form von Pulver, Teilchen oder Granulat vorliegen. Bei dem Polymer kann es sich um ein Polyacrylat handeln. Aber auch jedes andere Polymer, welches ein Hydrogel ausbildet ist geeignet. Das hydrogelbildende Polymer kann von einem Beutel oder einem Säckchen aus Gewebe umgeben sein. Der Beutel oder Sack kann sich bei Kontakt mit Wasser auflösen oder er kann so bemessen sein, dass er das Volumen des gequollenen Hydrogels fassen kann. Die Vorrichtung oder Teile der Vorrichtung können auch mit einem wasser- und/ oder nährstoffspeichernden Stoff, insbesondere einem hydrogelbildenden Polymer, beschichtet sein. Zusätzlich zu den wasser- und/ oder nährstoffspeichernden Stoffen oder alternativ zu diesen, können weitere das Pflanzenwachstum fördernde Substanzen, Düngemittel, Spezialpflanzerde oder Speichermaterialien sowie beliebige Mischungen aus zwei oder mehreren der Stoffe, Substanzen und dergleichen in dem Behälter angeordnet sein.

Die Vorrichtung weist eine Abdeckung auf, die die Öffnung des Behälters in Schließstellung der Vorrichtung zumindest teilweise bedeckt. Dies hat insbesondere den Vorteil, dass der Inhalt der Vorrichtung gegen das außen gelegene Pflanzsubstrat abgegrenzt Werden kann. Insbesondere, wenn die Vorrichtung einen wasserspeichernden Stoff enthält, kann dieser gegebenenfalls vor einer Verschmutzung durch Substrat geschützt werden. Darüber hinaus können wasserspeichernde Stoffe, welche zu einem Aufschwimmen neigen, daran gehindert werden, aus dem Wurzetbereich der Pflanze heraus zu gelangen. Die Abdeckung kann lösbar an dem Behälter befestigt sein. Behälter und Abdeckung können einstückig ausgebildet sein. Darüber hinaus kann die Abdeckung identisch zu dem Behälter mit dem mindestens einen Auffangabschnitt ausgestaltet sein.

Nach einer weiteren vorteilhaften Ausgestaltung der Erfindung ist die Abdeckung zumindest teilweise mit Aussparungen versehen. Die Abdeckung kann aus einem porösen oder perforierten Material bestehen. Die Abdeckung kann Poren, Langlöcher oder kleine Öffnungen aufweisen. Auch relativ große fensterartige Aussparungen sind möglich. Die Aussparungen können auch auf einen Teil der Abdeckung begrenzt sein. Zum einen wird erreicht, dass Wasser oder Flüssigkeit durch die Aussparungen in der Wandung der Abdeckung an das umliegende Pflanzsubstrat abgegeben werden kann. Zum anderen können die Wurzeln der Pflanze direkt über die Aussparungen in den Behälter eindringen.

Die Abdeckung ist mit einer der Versteifung dienenden Struktur ausgestattet. Dies ist vorteilhaft, da die Vorrichtung im Pflanzsubstrat einer erhöhten Druckbelastung ausgesetzt ist. Hierdurch wird die Formstabilität der Vorrichtung erhöht.

Nach einer weiteren vorteilhaften Ausgestaltung der Erfindung umfasst die Struktur mindestens ein dreidimensionales Reliefelement. Hierbei kann es sich um eine Rippe, Vertiefung, Einbuchtung, Noppe, Erhebung, einen Steg und/ oder dergleichen handeln. Bevorzugt umfasst die Struktur mehrere dreidimensionale Reliefelemente. Ebenfalls bevorzugt ist eine Vielzahl an dreidimensionalen Reliefelementen von der Struktur umfasst. Bei mehreren oder einer Vielzahl an Reliefelementen können identische, ähnliche und/ verschiedene Reliefelemente von der Struktur umfasst sein. Vorteilhafterweise erhöhen mehrere oder viele dreidimensionale Reliefelemente die Formstabilität der Vorrichtung.

Nach einer weiteren vorteilhaften Ausgestaltung der Erfindung ragt das Reliefelement in Schließstellung in den Behälter hinein. Dies hat insbesondere den Vorteil, dass sich die Vorrichtung auch sehr platzsparend lagern lässt. Zudem kann sich das Reliefelement in Schließstellung am Behälterboden abstützen, wodurch eine besondere Festigkeit der Vorrichtung erzielt wird.

Durch weitere vorteilhafte Ausgestaltungen kann das Reliefelement neben der Versteifungsfunktion zusätzliche Funktionen ausüben.

Das Reliefelement kann auf der dem Behälterboden abgewandten Seite der Abdeckung als vertiefter Abschnitt, insbesondere im Sinne einer Mulde oder Schale, ausgebildet sein. Hierdurch lässt sich in dem Reliefelement eine das Pflanzenwachstum fördernde Substanz anordnen. Bei dieser Substanz kann es sich insbesondere um Dünger handeln. Aber auch das Wachstum fördernde Phytohormone sind geeignet sowie Gemische aus Dünger und Phytohormonen. Aber auch weitere Nährstoffe, Enzyme, aktive Substanzen und Mischungen dieser sowie mit Dünger und Phytohormonen können zugefügt und damit in direkter Nähe der Wurzeln in das Pflanzsubstrat eingebracht werden, wodurch das Wachstum der Pflanze zusätzlich beschleunigt wird.

Das Reliefelement kann als Zuleitung ausgebildet sein. Hierzu kann das in den Behälter hineinragende Reliefelement als ein mindestens eine Aussparung umgebendes Hohlprofil beziehungsweise als hohles, kurzes Rohrstück oder als nach innen ragender Fortsatz mit Durchlassöffnung ausgeformt sein. Hierdurch können Wurzeln der zu versorgenden Pflanze leicht in den Innenraum des Behälters gelangen. Zudem wird die Wasseraufnahme in den Behälter gefördert. Bevorzugt verjüngt sich die Zuleitung in Richtung Behälterinnenraum trichterartig, so dass die genannten Effekte noch verstärkt auftreten.

Nach einer weiteren vorteilhaften Ausgestaltung der Erfindung weist die Vorrichtung mit Behälter und Abdeckung mindestens einen die Vorrichtung durchziehenden Kanal auf. Hierdurch wird die Durchwurzelbarkeit der Vorrichtung erhöht und dient der Verbesserung der Wurzelverankerung und damit der Standsicherung der zu versorgenden Pflanze. Der Kanaleinlass kann sich bei geschlossener Vorrichtung an der Abdeckung der Vorrichtung befinden, der Kanalauslass an dem Behälterboden. Durchläuft ein Kanal die Vorrichtung von oben nach unten, müssen die diesen durchziehenden Wurzeln eine vergleichsweise kurze Strecke zurücklegen, um in tiefere Schichten vorzudringen. Die Verankerung der Pflanze wird somit bereits in einem frühen Pflanzstadium verbessert. Sind mehrere Kanäle in der Vorrichtung angeordnet, so können diese wiederum durch weitere Kanäle miteinander verbunden sein. Durch die Anordnung mehrerer Kanäle steht der Pflanze ein großes Hohlraumvolumen zur Durchwurzelung zur Verfügung und wird die Verankerung der Pflanze weiter verbessert.

Die Wand eines Kanals kann von der Abdeckung, dem Behälter oder beiden gemeinsam ausgebildet sein. Es ist möglich, dass die Kanalwand zumindest teilweise mit Aussparungen versehen ist. Sie kann aus einem porösen oder perforierten Material bestehen und kann Poren, Langlöcher oder kleine Öffnungen enthalten. Durch diese Aussparungen können zum einen die Wurzeln der Pflanze in den Innenraum der Vorrichtung vordringen und zum anderen kann durch eine Wasserabgabe aus dem Behälter an die Kanäle eine direkte Versorgung der Pflanzenwurzeln mit Wasser, weiteren Flüssigkeiten und Nährstoffen erfolgen.

Nach einer weiteren vorteilhaften Ausgestaltung der Erfindung besteht die Vorrichtung zumindest in Teilen aus biologisch abbaubarem Material. Bevorzugt besteht die gesamte Vorrichtung aus biologisch abbaubarem Material. Es wird somit gewährleistet, dass die Vorrichtung oder Teile der Vorrichtung im Pflanzsubstrat nach einer gewissen Zeit abgebaut werden. Hierdurch ist die Vorrichtung besonders umweltfreundlich. Eine verrottbare Vorrichtung, insbesondere aus nachwachsenden Rohstoffen, kann so zur Humusbildung beitragen. Ein bevorzugtes biologisch abbaubares Material ist ein Werkstoff mit einem regenerativen Rohstoffanteil von 100%. Hierbei kann der Werkstoff eine Polymermatrix auf Basis von Lignin aufweisen. Zusätzlich kann der Werkstoff einen Naturfaseranteil enthalten. Dieser Naturfaseranteil beträgt vorzugsweise zwischen 10 und 20 Gew.% bezogen auf den Faserverbundwerkstoff, besonders bevorzugt 15 Gew.%.

Nach einer weiteren vorteilhaften Ausgestaltung der Erfindung sind zumindest Teile der Vorrichtung durch Tiefziehen und/ oder Spritzgießen hergestellt. Hierdurch kann die Vorrichtung benutzerdefiniert und besonders wirtschaftlich hergestellt werden.

Weitere Vorteile und vorteilhafte Ausgestaltungen der Erfindung sind der nachfolgenden Beschreibung, der Zeichnung und den Ansprüchen zu entnehmen.

### Zeichnung

In der Zeichnung sind zwei Ausführungsbeispiele einer erfindungsgemäßen Vorrichtung dargestellt. Es zeigen:
- Figur 1: einen Behälter eines ersten Ausführungsbeispiels der Vorrichtung in perspektivischer Aufsicht von oben,
- Figur 2: eine Abdeckung für einen Behälter des ersten Ausführungsbeispiels der Vorrichtung aus Figur 1 in perspektivischer Aufsicht von oben
- Figur 3: die Abdeckung gemäß Figur 2 von unten
- Figur 4: das erste Ausführungsbeispiel der Vorrichtung in perspektivischer Aufsicht von oben mit dem Behälter gemäß Figur 1 und der Abdeckung gemäß Figur 2 und 3
- Figur 5: die Vorrichtung gemäß Figur 4 in perspektivischer Aufsicht von oben
- Figur 6: Querschnitt durch die Vorrichtung gemäß Figur 5 an der mit C - C gekennzeichneten Stelle.
- Figur 7: einen Behälter eines zweiten Ausführungsbeispiels der Vorrichtung in perspektivischer Aufsicht von oben,
- Figur 8: eine Abdeckung für einen Behälter des zweiten Ausführungsbeispiels der Vorrichtung aus Figur 7 in perspektivischer Aufsicht von unten
- Figur 9: die Abdeckung gemäß Figur 8 in perspektivischer Aufsicht von oben
- Figur 10: das zweite Ausführungsbeispiel der Vorrichtung in perspektivischer Aufsicht von oben mit dem Behälter gemäß Figur 7 und der Abdeckung gemäß Figur 8 und 9
- Figur 11: Querschnitt durch die Vorrichtung gemäß Figur 10

### Beschreibung der Ausführungsbeispiele

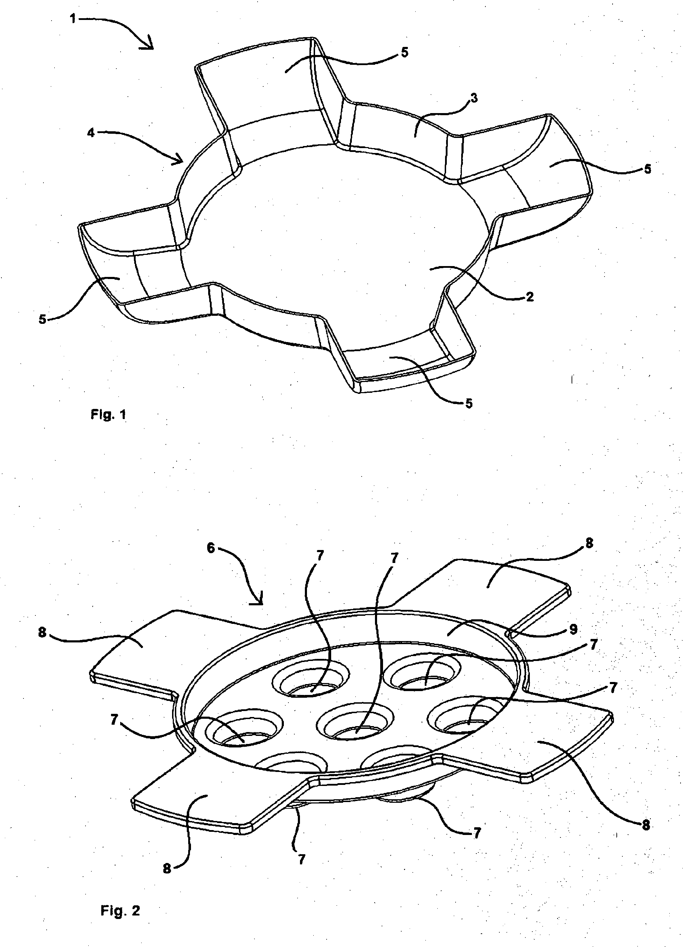

Figur 1 zeigt einen Behälter 1 eines ersten Ausführungsbeispiels der Vorrichtung in perspektivischer Aufsicht von oben mit einem Boden 2, einer Wand 3, einer dem Behälterboden 2 gegenüberliegenden Öffnung 4 und vier an dem Behälter 1 angeordneten Auffangabschnitten 5. Die Auffangabschnitte 5 sind flächig ausgebildet.

Figur 2 zeigt eine Abdeckung 6 für einen Behälter 1 des ersten Ausführungsbeispiels der Vorrichtung aus Figur 1 in perspektivischer Aufsicht von oben mit Reliefelementen 7, welche als Vertiefungen ausgebildet sind. Diese Reliefelemente 7 können mit Dünger, Spezialerde oder dergleichen befüllt werden. Aussparungen 11 in der Abdeckung 6, Dünger oder Spezialerde sind in der Figur 2 nicht dargestellt. Zudem ist die Abdeckung 6 mit Auffangabschnitte 5 bedeckenden Teilen 8 und mit einem vertieften Rand 9 ausgestattet. Die Auffangabschnitte 5 sind in den Figuren 1, 4 und 6 dargestellt.

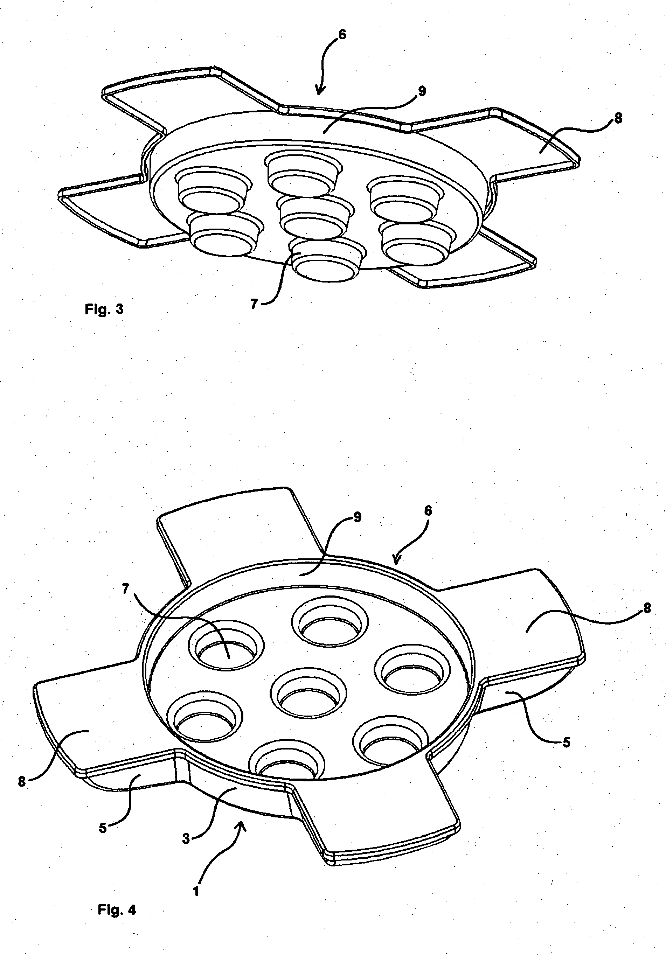

Figur 3 zeigt die Abdeckung gemäß Figur 2 von unten mit Reliefelementen 7, mit Auffangabschnitte 5 bedeckenden Teilen 8 und mit einem vertieften Rand 9.

Figur 4 zeigt das erste Ausführungsbeispiel der Vorrichtung in perspektivischer Aufsicht von oben mit dem Behälter 1 gemäß Figur 1 mit Wand 3, Auffangabschnitten 5 und der Abdeckung 6 gemäß Figur 2 und 3. Der Boden 2 ist in dieser Figur verdeckt, die Öffnung 4 des Behälters ist durch die Abdeckung 6 verschlossen. Aussparungen 11 in der Abdeckung 6 sind in der Figur 4 nicht dargestellt. Als Vertiefungen ausgebildete Reliefelemente 7, welche sich in dieser geschlossenen Stellung der Vorrichtung von dem Behälterboden 2 abstützen, dienen der Erhöhung der Stabilität der Vorrichtung. Gleichzeitig können sie der Aufnahme von Dünger oder anderen Nährstoffen dienen. In der Vorrichtung ist ein in der Figur 4 nicht sichtbarer wasserspeichernder Stoff in Form eines Hydrogels enthalten.

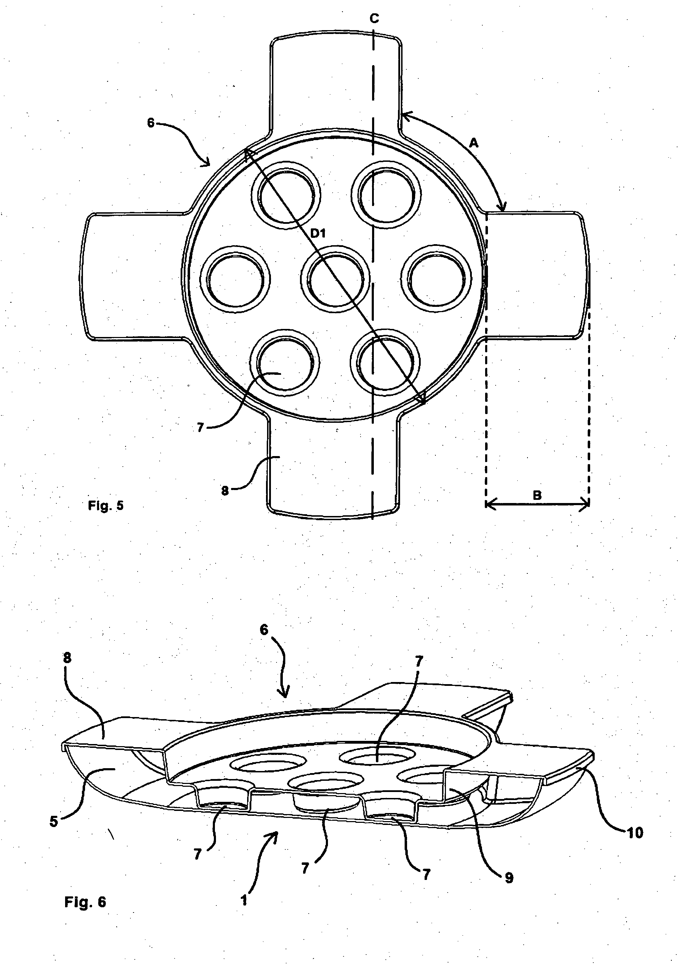

Figur 5 zeigt die Vorrichtung gemäß Figur 4 in perspektivischer Aufsicht von oben. Der mit Abschnitt A bezeichnete Bereich kennzeichnet den Bereich zwischen den Auffangabschnitten 5, wobei der mit B gekennzeichnete Bereich die Abmessung eines der flächigen, wannenartig geformten Auffangabschnitte 5 markiert. In dem mit D1 bezeichneten Bereich befindet sich der Wurzelbereich oder Wurzelballen der in Figur 5 nicht dargestellten Pflanze.

Figur 6 zeigt einen Querschnitt durch die Vorrichtung gemäß Figur 5 an der mit C - C gekennzeichneten Stelle mit Behälter 1, Boden 2, Wand 3, Öffnung 4, welche durch die Abdeckung 6 verschlossen ist, und drei der vier Auffangabschnitte 5. Ebenfalls dargestellt sind Reliefelemente 7, Auffangabschnitte 5 bedeckende Teile 8 der Abdeckung 6 sowie ein vertiefter Rand 9 der Abdeckung 6 und ein an der Abdeckung entlang führender Außenrand 10 der Abdeckung 6.

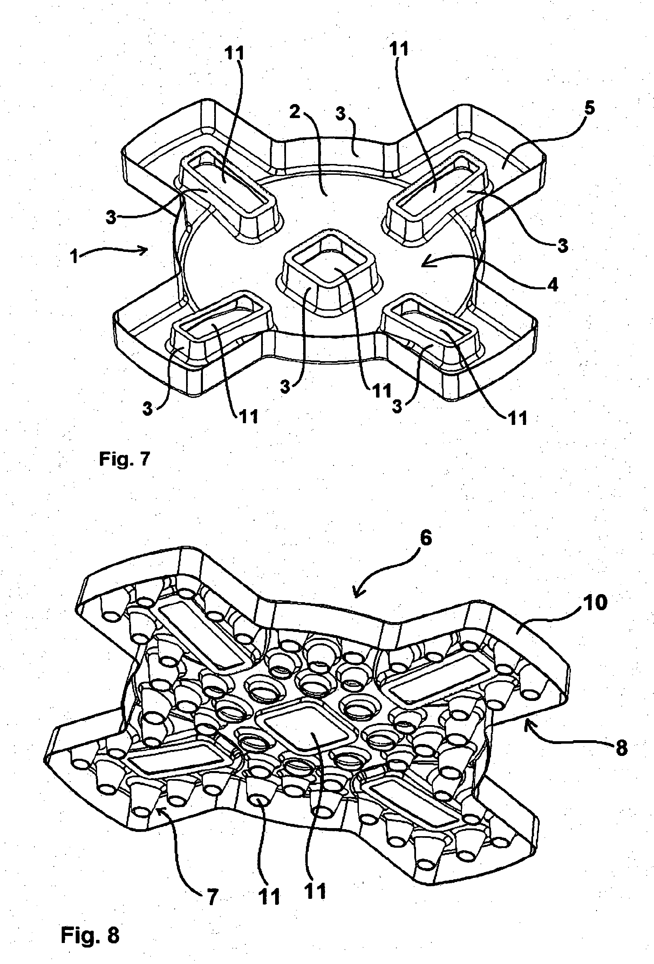

Figur 7 zeigt einen Behälter 1 eines zweiten Ausführungsbeispiels der Vorrichtung in perspektivischer Aufsicht von oben mit Behälterboden 2, Wand 3, einer dem Behälterboden 2 gegenüberliegenden Öffnung 4, mit vier an dem Behälter 1 angeordneten Auffangabschnitten 5 sowie fünf Aussparungen 11. Die Auffangabschnitte 5 sind flächig ausgebildet. Die fünf Aussparungen 11 sind jeweils von Wand umgeben, welche einen erhöhten Rand aufweist. Hierdurch wird in der Vorrichtung enthaltene Flüssigkeit daran gehindert, durch die Aussparungen 11 auszuströmen und in tiefere Pflanzsubstratschichten zu versickern, welche für die Pflanze nicht mehr erreichbar sind. Auch wird ein Ausspülen von Füllgut, wie wasser- und /oder nährstoffspeichernde Stoffe, verhindert oder zumindest vermindert.

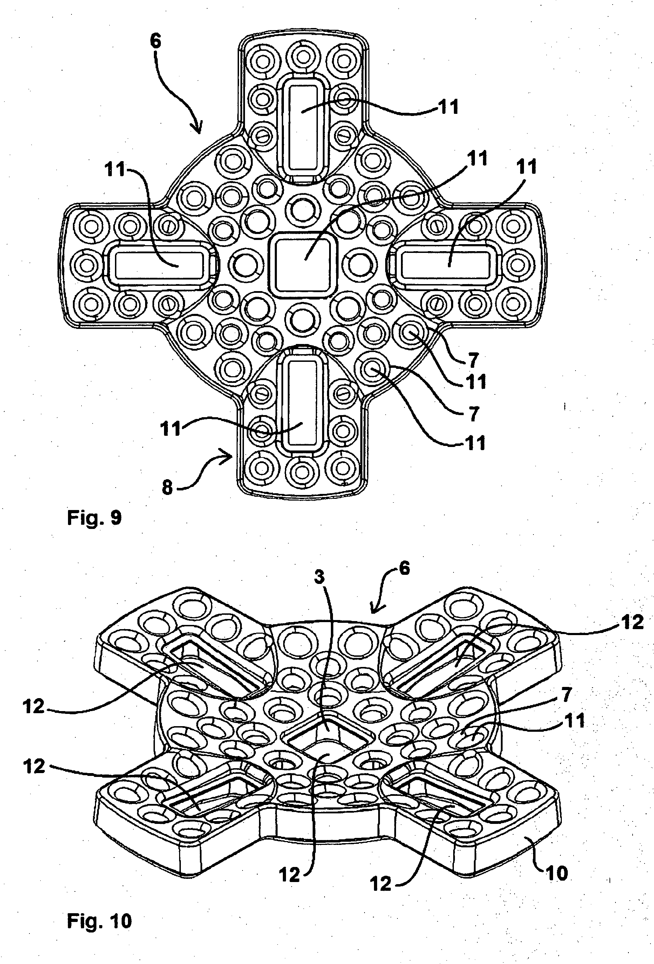

Figur 8 zeigt eine Abdeckung 6 für einen Behälter des zweiten Ausführungsbeispiels der Vorrichtung aus Figur 7 in perspektivischer Aufsicht von unten mit Reliefelementen 7, Auffangabschnitte 5 bedeckenden Teilen 8, einem Außenrand der Abdeckung 10 sowie Aussparungen 11 in der Abdeckung 6. Die Aussparungen 11 sind unterschiedlich ausgeformt. Die fünf eckigen Aussparungen 11 der Abdeckung 6 sind passgenau auf die fünf Aussparungen 11 des Behälters 1 der Vorrichtung abgestimmt und ausgeformt. Der Behälter 1 mit eckigen Aussparungen 11 ist in Figur 7 dargestellt. Bei geschlossener Vorrichtung bilden die eckigen Aussparungen 11 von Behälter 1 und Abdeckung 6 sowie die die Aussparungen 11 des Behälters 1 umgebende Wand 3 Kanäle 12 aus, welche die Figur 10 zeigt. Weitere Aussparungen 11, welche an den Reliefelementen 7 der Abdeckung angeordnet sind, verleihen den Reliefelementen 7 eine Doppelfunktion. Neben der Versteifung dienen die Reliefelemente 7 als Zuleitungen für Flüssigkeiten und zur Führung von Wurzeln in das Innere der Vorrichtung. Die Reliefelemente 7 sind trichterförmig und unterschiedlich dimensioniert. Im Zentrum der Abdeckung 6 sind die trichterförmigen Reliefelemente7 kürzer als in der Peripherie der Abdeckung 6. Die unterschiedliche Dimensionierung folgt einem nach innen gerichteten Gefälle der Abdeckung 6, welches im Zentrum der Abdeckung 6 seinen tiefsten Punkt erreicht. Durch dieses wird die Zuleitung von Flüssigkeit in das Innere der Vorrichtung beschleunigt. Darüber hinaus können über die Aussparungen 11, welche nicht an der Kanalbildung beteiligt sind, Wasser und andere Flüssigkeiten an die Umgebung der Vorrichtung abgegeben werden.

Figur 9 zeigt die Abdeckung 6 gemäß Figur 8 in perspektivischer Aufsicht von oben mit Reliefelementen 7, Auffangabschnitte 5 bedeckenden Teilen 8 sowie Aussparungen 11 in der Abdeckung 6.

Figur 10 zeigt das zweite Ausführungsbeispiel der Vorrichtung in perspektivischer Aufsicht von oben mit dem Behälter 1 gemäß Figur 7 und der Abdeckung 6 gemäß Figur 8 und 9 sowie Kanälen 12. Sowohl der Behälter 1 als auch die Abdeckung 6 weisen ein auf das Zentrum der Vorrichtung gerichtetes Gefälle auf. Die Kanäle 12, welche die Vorrichtung von der Abdeckung 6 zum Boden des Behälters 1 durchziehen, werden durch passgenau aufeinander angeordneten Aussparungen 11 von Behälter 1 und Abdeckung 6 sowie durch um die Aussparungen 11 des Behälters 1 angeordnete Wand 3 des Behälters 1 gebildet. Die Wände der Kanäle 12 sind zum größten Teil aus der Wand 3 des Behälters gebildet. Im Innern der Vorrichtung befindet sich, von der Abdeckung 6 verdeckt und deshalb in Figur 10 nicht sichtbar, das Füllgut der Vorrichtung.

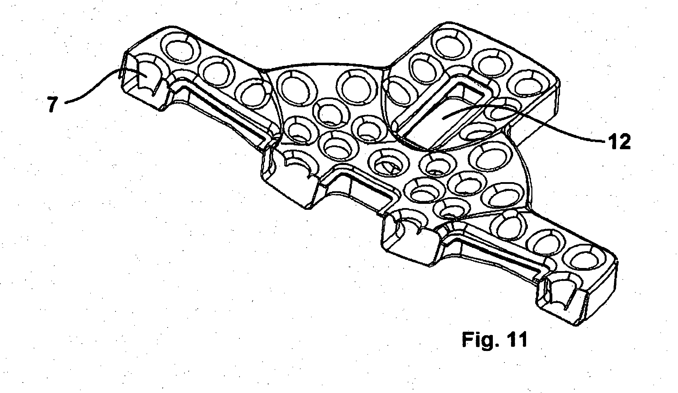

Figur 11 zeigt einen Querschnitt durch die Vorrichtung gemäß Figur 10.

Sämtliche Merkmale der Erfindung können sowohl einzeln als auch in beliebiger Kombination miteinander erfindungswesentlich sein.

### Bezugszahlen

- 1.: Behälter
- 2.: Boden
- 3.: Wand
- 4.: Öffnung
- 5.: Auffangabschnitt
- 6.: Abdeckung
- 7.: Reliefelement
- 8.: Auffangabschnitt bedeckender Teil der Abdeckung
- 9.: vertiefter Rand der Abdeckung
- 10.: Außenrand der Abdeckung
- 11.: Aussparung
- 12.: Kanal

## Patentansprüche

1. Vorrichtung zur Langzeitversorgung einer Pflanze in einem Pflanzsubstrat, mit einem Behälter (1) zur Anbringung im Wurzelbereich einer Pflanze, mit einer den Behälter (1) unten als Behälterboden (2) und seitlich als Wand (3) begrenzenden Wandung,
mit einer dem Behälterboden (2) gegenüberliegenden Öffnung (4), und mit mindestens einem seitlich nach außen abstehenden Auffangabschnitt (5) an dem Behälter (1) zur Aufnahme von im Pflanzsubstrat versickernden Wassers, **dadurch gekennzeichnet,**
**dass** die Vorrichtung eine Abdeckung (6) aufweist, die die Öffnung (4) des Behälters (1) in Schließstellung der Vorrichtung zumindest teilweise bedeckt und
**dass** die Abdeckung (6) mit einer der Versteifung dienenden Struktur ausgestattet ist.

2. Vorrichtung nach Anspruch 1, **dadurch gekennzeichnet, dass** der mindestens eine Auffangabschnitt (5) flächig, rinnen-, schalen- oder wannenförmig ausgebildet ist.

3. Vorrichtung nach Anspruch 1 oder 2, mit mehreren Auffangabschnitten (5), **dadurch gekennzeichnet, dass** die mehreren seitlich nach außen abstehenden Auffangabschnitte (5) zumindest in einem Teilbereich voneinander beabstandet sind.

4. Vorrichtung nach einem der vorhergehenden Ansprüche, **dadurch gekennzeichnet, dass** der Behälter (1) mit einem von außen nach innen gerichteten Gefälle ausgestattet ist.

5. Vorrichtung nach einem der vorhergehenden Ansprüche, **dadurch gekennzeichnet, dass** die Wandung des Behälters (1) zumindest teilweise mit Aussparungen (11) versehen ist.

6. Vorrichtung nach einem der vorhergehenden Ansprüche, **dadurch gekennzeichnet, dass** ein wasserspeichernder und/ oder nährstoffspeichernder Stoff in dem Behälter (1) angeordnet ist.

7. Vorrichtung nach einem der vorhergehenden Ansprüche, **dadurch gekennzeichnet, dass** die Abdeckung (6) zumindest teilweise mit Aussparungen (11) versehen ist.

8. Vorrichtung nach einem der vorhergehenden Ansprüche, **dadurch gekennzeichnet, dass** die Struktur mindestens ein dreidimensionales Reliefelement (7) umfasst.

9. Vorrichtung nach Anspruch 8, **dadurch gekennzeichnet, dass** das Reliefelement (7) in Schließstellung in den Behälter (1) hineinragt.

10. Vorrichtung nach einem der vorhergehenden Ansprüche, **dadurch gekennzeichnet, dass** die Vorrichtung mindestens einen die Vorrichtung durchziehenden Kanal (12) aufweist.

11. Vorrichtung nach einem der vorhergehenden Ansprüche, **dadurch gekennzeichnet, dass** die Vorrichtung zumindest in Teilen aus biologisch abbaubarem Material besteht.

## Claims

1. Apparatus for long term supply of a plant in a plant substrate, with a container (1) for installation in the root zone of a plant, with a wall that delimits the container (1) downwards as the container base (2) and sideways as the side wall (3), with an opening (4) on the opposite side to the container base (2), and with at least one collecting section protruding outwards to the side (5) on the container (1) to collect water seeping through the plant substrate, **characterised in that** the apparatus exhibits a cover (6) that at least partially covers the opening (4) of the container (1) in the closed position of the apparatus, and that the cover (6) is equipped with a reinforcing structure.

2. Apparatus according to claim 1, **characterised in that** at the least one collecting section (5) has a flat, channel, tray or trough shape.

3. Apparatus according to claim 1 or 2, with several collecting sections (5), **characterised in that** the several collecting sections (5) protruding outwards to the side are spaced apart at least over a partial section.

4. Apparatus according to one of the previous claims, **characterised in that** the container (1) is equipped with a gradient that slopes downwards to the inside.

5. Apparatus according to one of the previous claims, **characterised in that** the wall of the container (1) is equipped at least partially with openings (11).

6. Apparatus according to one of the previous claims, **characterised in that** a water-holding and/ or feed-holding substance is arranged in the container (1).

7. Apparatus according to one of the previous claims, **characterised in that** the cover (6) is equipped at least partially with openings (11).

8. Apparatus according to one of the previous claims, **characterised in that** the structure encompasses at least one three-dimensional relief element (7).

9. Apparatus according to claim 8, **characterised in that** the relief element (7) in the closed position protrudes into the container (1).

10. Apparatus according to one of the previous claims, **characterised in that** the apparatus exhibits at least one channel (12) that passes through the apparatus.

11. Apparatus according to one of the previous claims, **characterised in that** the apparatus consists at least in part of biodegradable material.

## Revendications

1. Dispositif de traitement à long terme d'une plante dans un substrat de plante, avec un conteneur (1) à mettre en place au niveau des racines d'une plante, avec une paroi séparatrice limitant le conteneur (1) vers le bas en tant que fond du conteneur (2) et sur les côtés en tant que paroi latérale (3), avec une ouverture (4) située à l'opposé du fond du conteneur (2), et avec au moins une partie collectrice (5) en saillie vers l'extérieur sur le côté du conteneur (1) et servant à recueillir l'eau s'infiltrant dans le substrat de plante, **caractérisé en ce que**, le dispositif présente un recouvrement (6) qui recouvre au moins en partie l'ouverture (4) du conteneur (1) en position fermée du dispositif, et **en ce que** le recouvrement (6) est doté d'une structure servant de renfort.

2. Dispositif selon la revendication 1, **caractérisé en ce qu'**au moins une des parties collectrices (5) est plane ou en forme de rainure, de coupelle ou de cuve.

3. Dispositif selon la revendication 1 ou 2, avec plusieurs parties collectrices (5), **caractérisé en ce que** lesdites plusieurs parties collectrices (5) en saillie vers l'extérieur sur le côté sont distantes les unes des autres au moins dans une zone partielle.

4. Dispositif selon l'une quelconque des revendications précédentes, **caractérisé en ce que** le conteneur (1) présente une inclinaison dirigée de l'extérieur vers l'intérieur.

5. Dispositif selon l'une quelconque des revendications précédentes, **caractérisé en ce que** la paroi séparatrice du conteneur (1) est dotée au moins en partie d'évidements (11).

6. Dispositif selon l'une quelconque des revendications précédentes, **caractérisé en ce qu'**une matière pouvant emmagasiner l'eau et/ou les nutriments est disposée dans le conteneur (1).

7. Dispositif selon l'une quelconque des revendications précédentes, **caractérisé en ce que** le recouvrement (6) est doté au moins en partie d'évidements (11).

8. Dispositif selon l'une quelconque des revendications précédentes, **caractérisé en ce que** la structure comprend au moins un élément en relief tridimensionnel (7).

9. Dispositif selon la revendication 8, **caractérisé en ce que** ledit élément en relief (7) dépasse dans le conteneur (1) en position fermée.

10. Dispositif selon l'une quelconque des revendications précédentes, **caractérisé en ce que** le dispositif présente au moins un canal (12) traversant tout le dispositif.

11. Dispositif selon l'une quelconque des revendications précédentes, **caractérisé en ce que** le dispositif est fait au moins en partie d'un matériau biodégradable.
